# EUROPEAN PATENT SPECIFICATION

(11) **EP 2 951 469 B1**
(45) Date of publication and mention of the grant of the patent: **18.01.2017**
(21) Application number: 13714693.2
(22) Date of filing: 01.02.2013
(51) Int. Cl.: F16H 61/16, F16H 61/12, F16H 61/02

(54) **TRANSMISSION CONTROL METHOD AND SYSTEM**
VERFAHREN UND SYSTEM ZUR ÜBERTRAGUNGSSTEUERUNG
PROCÉDÉ ET SYSTÈME DE COMMANDE DE TRANSMISSION

(43) Date of publication of application: 09.12.2015
(73) Proprietor: Turner Powertrain Systems Limited, West Midlands Wolverhampton, WV6 0QT (GB)
(72) Inventor: VEITCH, Steven, Wolverhampton West Midlands WV6 0QT (GB); GALLEGE, Nuwan, Janaka, Wolverhampton West Midlands WV6 0QT (GB); DREWS, Brent, G., Washington, Illinois 61571 (US); FREEMAN, Adam, D., Washington, Illinois 61571 (US)
(74) Representative: BRP Renaud & Partner mbB Rechtsanwälte Patentanwälte Steuerberater
(86) International application number: PCT/IB2013/050865
(87) International publication number: WO 2014/118598

(56) References cited:
- DE-A1-102005 034 050
- US-A- 5 846 162
- US-B1- 6 257 082

## Description

### TECHNICAL FIELD

This invention relates to a method and system for controlling a transmission comprising a plurality of clutches, and particularly to a control method and system for controlling a powershift transmission comprising a plurality of speed and directional clutches, electronically.

### BACKGROUND

A powershift transmission for a machine or vehicle typically comprises a plurality of speed and direction changing clutches, and a plurality of transmission gears, wherein combinations of pairs of direction and speed changing clutches effectively recruit transmission gears to provide a plurality of transmission gear ratios.

The transmission gear ratios are selectable, for example, by an operator via a suitable controller such as a joystick to provide a desired transmission of power from a machine engine to a drive arrangement of the machine, in a conventional manner.

Operator selected transmission gear ratio shifts to change the direction of travel while the machine is moving are common especially with machines such as forklifts. Though some direction changing shifts are acceptable, certain shifts, for example, high speed direction changing shifts from high speed transmission gear ratios in one direction to low speed transmission gear ratios in a reverse direction are undesirable as they potentially cause damage to one or both of the proposed incoming speed and direction changing clutches when engaged. In many powershift transmissions, the proposed incoming direction changing clutch is often most prone to damage during high speed direction changing shifts as much of the energy of the machine is effectively absorbed by the direction changing clutch during such a shift.

Any attempt to make one or all directional clutches larger and stronger to prevent damage is problematic as it is usually expensive or impractical to realise this modification. Though it is known that damage to the clutches during high speed direction changing shifts may be ameliorated by selecting a higher speed clutch before engagement of the lower speed clutch, systems to achieve this desired end are unsophisticated hydraulically/mechanically actuated systems which are essentially time based, automatically and momentarily engaging the higher speed clutch before engaging the lower speed clutch. As the shift to the higher speed clutch is only for a predetermined amount of time, there is risk that when the low speed clutch is actually engaged, the clutch could still possibly be exposed to an undesirable amount of energy from the machine which could consequently causing damage to the low speed clutch.

A method in accordance with the preamble of claim 1 is known from US 6 257 082 B.

### SUMMARY

According to a first aspect of the invention, there is provided a method of controlling a transmission comprising a plurality of clutches and a plurality of transmission gears, the method comprising: receiving a shift command to cause engagement of a selected clutch of the plurality of clutches to engage a selected transmission gear ratio of the plurality of transmission gears; receiving data indicative of operating conditions of the transmission; determining whether the selected clutch is suitable for engagement by comparing the operating condition data with a corresponding operating condition threshold value or range associated with the selected clutch; generating, in response to determining that the selected clutch is unsuitable for engagement, at least one alternate clutch control signal to cause engagement of at least one suitable alternate clutch of the plurality of clutches to engage at least one alternate transmission gear ratio of the plurality of transmission gears; and generating, in response to determining that the selected clutch is suitable for engagement, a selected clutch control signal to cause engagement of the selected clutch to engage the selected transmission gear ratio, wherein the at least one alternate clutch is selected such that the transmission achieves operating conditions that meet the operating condition threshold value or range of the selected clutch such that the selected clutch is suitable for engagement.

According to a second aspect of the invention there is provided a system to control a transmission, the transmission comprising a plurality of clutches and a plurality of transmission gears, the system comprising: a shift receiver module operable to receive a shift command to cause engagement of a selected clutch of the plurality of clutches to engage a selected transmission gear ratio of the plurality of transmission gears; an operating condition monitoring module operable to receive data indicative of operating conditions of the transmission; a clutch suitability module operable to determine whether the selected clutch is suitable for engagement by comparing the operating condition data with a corresponding operating condition threshold value or range associated with the selected clutch; and a clutch control module operable to: generate, in response to determining that the selected clutch is unsuitable for engagement, at least one alternate clutch control signal to cause engagement of at least one suitable alternate clutch of the plurality of clutches to engage at least one alternate transmission gear ratio of the plurality of transmission gears; and generate, in response to the clutch suitability module determining the selected clutch is suitable for engagement, a selected clutch control signal to cause engagement of the selected clutch to engage the selected transmission gear ratio, wherein the clutch control module is operable to select the at least one alternate clutch such that the transmission achieves operating conditions that meet the operating condition threshold value or range of the selected clutch such that the selected clutch is suitable for engagement.

Accordingly to another aspect of the present disclosure there is provided a non-transitory machine-readable medium embodying instructions that, when executed by a machine, cause the machine to receive a shift command signal to cause engagement of a proposed clutch; determine, automatically, whether the proposed clutch is suitable for engagement; and generate an alternate clutch control signal to cause engagement of at least one suitable alternate clutch, in response to determining that the proposed clutch is unsuitable for engagement; or generate a proposed clutch control signal to cause engagement of the proposed clutch, in response to determining that the proposed clutch is suitable for engagement.

### BRIEF DESCRIPTION OF THE DRAWINGS

- **FIG. 1**: shows a block diagram of power train comprising a transmission control system, in accordance with an example embodiment;
- **FIG. 2**: shows a block diagram of a transmission control system, in accordance with an example embodiment;
- **FIG. 3**: shows a block diagram of a transmission control system, in accordance with an example embodiment;
- **FIG. 4**: shows a high-level flow diagram of a method of controlling a transmission, in accordance with an example embodiment; in response to receipt of a shift command signal;
- **FIG. 5**: shows a relatively low-level flow diagram of a part of a method of controlling a transmission, in accordance with an example embodiment, to determine at least suitability of the proposed clutch for engagement;
- **FIG. 6**: shows high level-flow diagram of a portion of a part of a method of controlling a transmission control system, in accordance with an example embodiment, to determine suitability of engagement of a further alternate clutch;
- **FIG. 7**: shows another high-level flow diagram of a method of controlling a transmission, in accordance with an example embodiment; in response to receipt of a shift command signal;
- **FIG. 8**: shows a relatively low-level flow diagram of a method of controlling a transmission, in accordance with an example embodiment, in response to receiving a shift command signal; and
- **FIG. 9**: shows a logic flow diagram for gear ratio transmission shifts, in accordance with an example embodiment.

### DETAILED DESCRIPTION

In the following description, for purposes of explanation, numerous specific details are set forth to provide a thorough understanding of example embodiments. It will be evident, however, to one skilled in the art that the present embodiments or other embodiments may be practiced without these specific details.

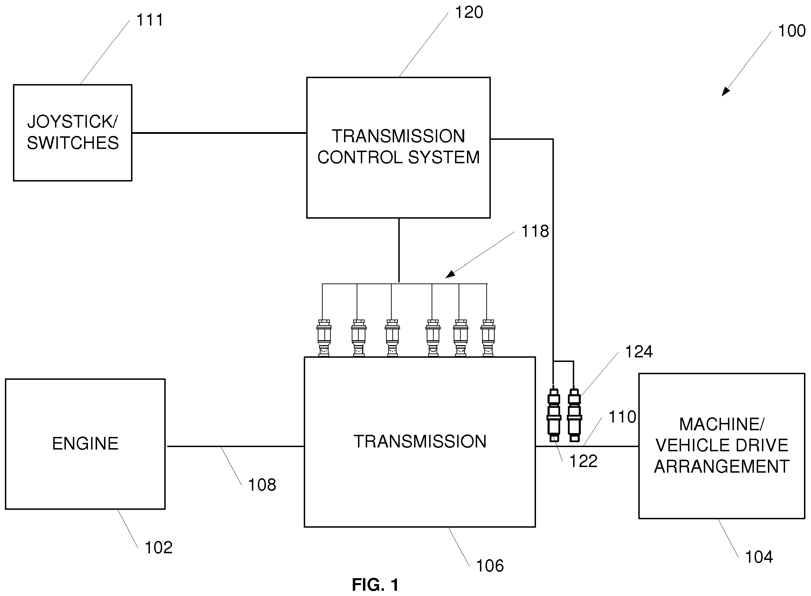

Referring to FIG. 1 of the drawings, a power train of a machine or vehicle in accordance with the invention is generally indicated by reference numeral 100. The power train 100 comprises an internal combustion engine 102 coupled to a machine drive arrangement 104 via a transmission 106. The transmission 106 comprises a rotatable input shaft 108 operatively connectable to the engine 102 and a rotatable output shaft 110 operatively connectable to the drive arrangement 104 which typically comprises a drive shaft. The input shaft 108 may be coupled to the engine 102 via a torque converter means (not shown) in a conversional fashion. The machine associated with the power train 100 may be a work machine or vehicle, for example, a forklift machine/truck, or the like.

Though not illustrated in detail, the transmission 106 typically comprises a powershift transmission including a plurality of clutches (not shown), particularly a plurality of speed changing clutches (speed clutches) and direction changing clutches (direction clutches). The clutches may be conventional wet disk clutches. In an example embodiment, the transmission 106 may comprise a six clutch configuration comprising two forward direction changing clutches, forward low (FWD LOW) and forward high (FWD HIGH), one reverse direction changing clutch (REV); and three speed changing clutches, first speed changing clutch (SPD1), second speed changing clutch (SPD 2), and third speed changing clutch (SPD3). For ease of explanation, nomenclature given to the various speed and direction changing clutches will be used throughout the specification.

Though not discussed further, it will be appreciated that in other example embodiments, powershift transmissions may have different clutch configurations, for example, different numbers of direction and speed changing clutches to the example embodiment described.

In any event, combinations of pairs of direction changing clutches and speed changing clutches effectively provide a plurality of transmission gear ratios which control the transmission of power between the engine 102 and the drive arrangement 104. The transmission 106 may be a splitter-type powershift transmission which requires at least one direction clutch and one speed clutch to provide a transmission gear ratio, else the transmission 106 is in neutral. Transmission gear ratios may be better understood with reference to Table 1:

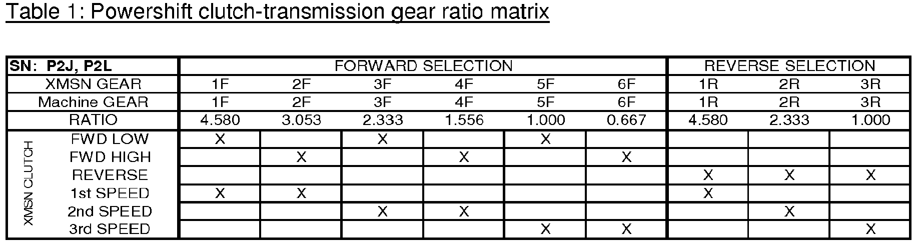

In Table 1, the transmission gear ratios or transmission/gear ratios are provided as forward transmission gear ratios 1F, 2F, 3F, 4F, 5F, 6F, and reverse transmission gear ratios 1 R, 2R, 3R. Speed and direction clutches, as named above, which engage to provide the respective transmission gear ratios are marked accordingly. By way of examples, for an engaged transmission gear ratio of 2F, the FWD HIGH direction clutch and the SPD1 speed clutch are engaged, and for a transmission gear ratio of 2R, the REV direction clutch and the SPD2 speed clutch are engaged.

Different transmission gear ratios, for example, those provided in Table 1, are engaged by transmission or gear shifts selected by an operator or user via a joystick or switch arrangement 111 located in a cab of the machine. The selection by the operator of a desired gear ratio, for example, 2F by way of the joystick 111, generates a shift signal which effectively causes disengagement of an engaged transmission gear ratio, and engagement of gear ratio 2F by engaging first the SPD1 speed clutch and then the FWD HIGH direction clutch associated with the gear ratio 2F almost instantaneously. The shift signal may be indicative of individual speed and direction clutches associated with a selected transmission gear ratio. Instead, or in addition, the shift signal may be indicative of the selected transmission gear ratio wherein the speed and direction clutches may be determined by association.

An engaged direction or speed clutch may or may not be disengaged and re-engaged during certain shifts. For example, with reference to the speed clutch, in a speed shift in the same direction from gear ratio 2R to 1 R, the REV clutch need not be disengaged while the speed clutch changes from SPD 2 to SPD1. However, in some example embodiments, the both the REV and SPD2 clutches disengage and both clutches REV and SPD1 re-engage during speed shifts from gear ratio 2R to 1 R. It will be appreciated that similar considerations apply to direction shifts at the same speed wherein the speed clutch remains engaged if only the directional clutch is required to change. However, for ease of explanation, reference will be further be made to example embodiments whereby both engaged speed and direction clutches are disengaged from operative engagement before engagement of a proposed transmission gear ratio, irrespective if an outgoing clutch of an outgoing transmission ratio is shared by an incoming transmission ratio to be engaged.

In any event, the clutches of the transmission 106 are typically hydraulically actuated clutches which are disposed in a hydraulic circuit and are each operable to engage operatively, in a conventional manner, in response to an actuating flow of pressurised hydraulic fluid thereto. The clutches are controllable by way of a solenoid valve arrangement 118 comprising a solenoid corresponding to each clutch. Actuation of a solenoid for example, on receipt of a suitable control signal thereby, causes the solenoid to direct, or cause direction of, an actuating flow of pressurised hydraulic fluid to its respective clutch, thereby causing operative engagement of the clutch. The control signals may switch the solenoids on/off, to control engagement of the clutches. In use, for example, the solenoids are initially energised with a 2 Ampere current and then reduced to 800 mA.

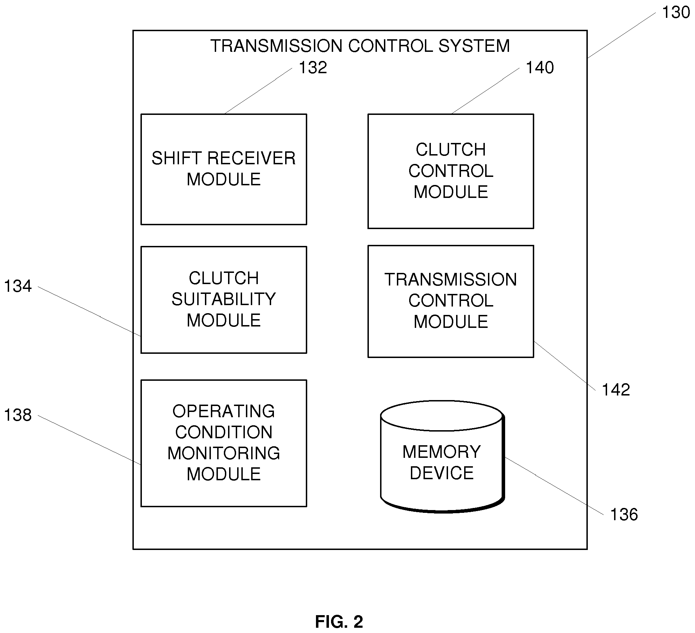

The transmission 106 may be electronically coupled to a transmission control system 130 as illustrated in greater detail in FIG.2. The transmission control system 130 may control operation of the transmission 106 electronically at least by controlling engagement of the clutches.

Though not illustrated, the transmission control system 130 comprises a plurality of conventional electronic components, analogue-to-digital converters, input-output devices, solenoid drivers, electronic circuitry, and one or more processors. It is to be understood that the one or more processors may comprise one or more microprocessors, controllers, or any other suitable computing devices, resource, hardware, software, or embedded logic. Also not illustrated, the transmission control system 130 may comprise memory in the processors, main memory, and/or hard disk drive, which carries a set of non-transient machine readable instructions or software/code which when executed by the one or more processors, causes the system 130, to operate in a manner as described herein.

In FIG.2, the transmission control system 130 comprises a plurality of components or modules which correspond to the functional tasks to be performed thereby. In this regard, "module" in the specification will be understood to include an identifiable portion of code, computational or executable instructions, data, or computational object to achieve a particular function, operation, processing, or procedure. It follows that a module need not be implemented in software; a module may be implemented in software, optionally hardware, or a combination of software and hardware. Further, the modules need not necessarily be consolidated into one system, for example, system 130 but may be spread across a plurality of other devices and systems to provide the functionality described herein.

In one example embodiment, the one or more processors, executing the aforementioned machine readable instructions or software/code, may effectively provide the modules, or the functionality thereof, as described herein.

The transmission control system 130 may comprise a shift receiver module 132 operable to receive a shift command to cause engagement of a proposed clutch. The shift command received by the receiver module 132 may optionally comprise the shift signal generated by the joystick in response to a transmission gear ratio selection. However, the shift command may typically comprise data indicative of the shift signal corresponding to a particular transmission gear ratio selection. The shift command may comprise information indicative of the proposed speed and/or direction clutch to be engaged as per the selection of the particular transmission gear ratio. However, in some example embodiments, the shift command may simply comprise information indicative of the selection of the particular transmission gear ratio, the module 132 may therefore be configured to determine or infer the proposed speed and/or direction clutches to be engaged by association. In any event, it will be appreciated that the system 130 may be operable to determine which proposed speed and/or direction clutch is to be engaged in response to an operator selection.

As an aside, it will be noted that though the system 130 will initially be described with reference to the modules controlling engagement of a single proposed clutch, the system 130 may be used for controlling the engagement of a transmission gear ratio provided by both a speed and direction clutch, as will be discussed below.

The transmission control system 130 may also comprise a clutch suitability module 134 operable to determine whether the proposed clutch is suitable for engagement, in response to the shift receiver module 132 receiving the shift command. To this end, the transmission control system 130 may comprise a memory device 136 storing data, for example, operating threshold data associated with one or more clutches of the transmission 106. The operating threshold data may be indicative of at least one tolerable operating condition threshold associated with the respective clutches.

In this regard, it will be noted that each clutch of the transmission 106 may comprise one or more operating condition thresholds or limits associated therewith, wherein operating the clutch outside the thresholds or limits causes, or increases the risk of, damage to the clutch if/when engaged. The operating condition thresholds may be represented or defined by one or more operating tolerance bands or values. In one example embodiment, the operating condition threshold may be indicative of, for example, a maximum tolerable rotational speed of the clutch, or maximum tolerable energy, torque or temperature which a clutch will be able to tolerate, in use, without damage being caused thereto. In the example embodiment under discussion the operating condition threshold is represented by a transmission output speed threshold value.

The transmission control system 130 also comprises an operating condition monitoring module 138 operable to receive, for example, continually, operating condition data associated with the prevailing operating conditions (associated with the transmission 106, or the power train 100) which the proposed clutch will be exposed to, if engaged. The operating condition data received is usually matched with the operating condition threshold value and it follows that in the example embodiment under discussion, the operating condition data comprises transmission output speed values measured or determined by the sensor 122.

For brevity, where applicable, it will be noted that in the specification, the terms "transmission output speed threshold" and "transmission output speed" may be refer to their representative values, i.e., the "transmission output speed threshold value" and the "transmission output speed value", and vice versa.

The clutch suitability module 134 is operable to compare the received transmission output speed values with the transmission output speed threshold value stored in the memory device 136 to determine whether the proposed clutch is suitable for engagement. In particular, if a received transmission output speed value is within the transmission output speed threshold, for example, if the received transmission output speed value is below the transmission output speed threshold value, the module 134 determines that the proposed clutch is suitable for engagement. Similarly, the module 134 may be operable to determine the proposed clutch is unsuitable for engagement if the received transmission output speed value is outside the transmission output speed threshold, for example, if the received transmission output speed value is above/equal to the transmission output speed threshold value.

For purposes of the comparison mentioned above, the module 134 may take an average of transmission output speed threshold values in a particular time window, or may perform the comparison as described above on an instantaneous transmission output speed threshold value received.

The operating condition threshold values may optionally be adjustable depending on the operating conditions or parameters of the machine, for example, shift feel or jerk observed by the operator, improving clutch energy, or the like. The system 130 may be operable to receive inputs to control the operating condition threshold values used by the module 134 for the purposes of comparison.

An operating condition threshold value is typically determined by way of trial, experimentation or calculation. For example, if a clutch has a certain maximum tolerable operating condition threshold associated therewith such as a maximum rotational speed, or clutch temperature, above which, the clutch will be damaged, a corresponding transmission output speed threshold value at which the clutch will reach this tolerable rotational speed or temperature is determined and used as an operating condition threshold value associated with the clutch. Similarly, other operating threshold values corresponding to other operating condition data received by the module 138 may be determined.

It follows that in other example embodiments, the module 138 may be configured to receive a plurality of measurable parameters or operating condition data associated with the transmission 106 or the power train (e.g., clutch speed, transmission input speed, engine speed, and machine speed via suitable sensors or by calculation). Corresponding operating condition threshold values (matched to the received parameters) are therefore stored in the memory device 136.

In the case of a clutch temperature threshold, the clutch temperature threshold is determined by the material from which the clutch is constructed or in other words the clutch temperature threshold is a function of clutch material properties. However, the clutch temperature is a function of clutch energy. Energy absorbed by the clutch is a function of the machine inertia (mass and speed) and the transmission inertia (ratio change and speed) and the time to engage the clutch. The relative speed difference of an on-coming and an out-going clutch is known (ratio change) or predetermined. The machine mass and the time to fully engage the clutch is known or predetermined. It follows that the only variable therefore, is speed. In other words clutch temperature is a function of machine mass, ratio change, clutch engagement time and machine speed, with the only variable being speed.

The transmission control system 130 further comprises a clutch control module 140 operable to generate an alternate clutch control signal to cause engagement of at least one suitable alternate clutch, in response to the clutch suitability module 134 determining that the proposed clutch is unsuitable for engagement. It follows that the module 140 may be operable to generate a proposed clutch control signal to cause engagement of the proposed clutch, in response to the clutch suitability module 134 determining the proposed clutch is suitable for engagement.

The alternate clutch is typically engaged momentarily prior to engagement of the proposed clutch. In this regard, the operating condition monitoring module 138 is operable to receive transmission output speed in a continual fashion subsequent to engagement of the alternate clutch, the clutch suitability module 134 being operable to determine whether the proposed clutch is suitable for engagement subsequent to engagement of the at least one alternate clutch based on the continually received transmission output speed.

When determining whether the proposed clutch is suitable for engagement after engagement of the alternate clutch, the module 134 may be operable to compare received transmission output speed with either the first transmission output speed threshold value initially used to determine suitability of the proposed clutch or a second operating threshold value, also associated with the proposed clutch, represented by second transmission output speed threshold value, slightly lower than the threshold value initially used. For example, the first transmission output speed threshold value may be 650 Hz and the second transmission output speed threshold value may be 600Hz. The second transmission output speed threshold value may be adjustable or tuneable depending on the operating conditions or parameters of the machine, for example, shift feel or jerk observed by the operator, improving clutch energy, or the like.

If, after the engagement of the alternate clutch, the proposed clutch is determined to be suitable for engagement, the clutch control module 140 operates to generate a proposed clutch control signal to cause engagement of the proposed clutch. The alternate clutch is stronger than the proposed clutch and has a transmission output speed threshold value higher than that of the proposed clutch. In this way, the proposed clutch is not exposed to operating conditions which would usually damage the same, if engaged. The proposed clutch is then engaged when it is operationally safe to do so without placing the same in risk of damage.

The clutch control module 40 may be operable to determine if another alternate clutch is to be engaged before engagement of the proposed clutch. This may be in accordance with a predetermined rule stored in the memory device 136.

The clutch control module 140 may be operable to generate a further alternate clutch control signal, in a sequential manner after generation of the alternate clutch control signal, to cause engagement of the at least one preselected further alternate clutch, prior to generating the proposed clutch control signal, in response to determining that the at least one further alternate clutch is suitable for engagement.

As alluded to above, when receiving a shift command, it will be noted that there is a proposed direction clutch and proposed speed clutch associated with a particular proposed associated transmission gear ratio selected. For example, referring also to Table 1, if a shift command is received to engage a proposed transmission gear ratio 2F from a presently engaged transmission gear ratio 2R, the proposed direction clutch is FWD HIGH and the proposed speed clutch is SPD1.

In one example embodiment, the transmission control system 130 may optionally comprise a transmission control module 142 operable to generate an alternate transmission gear ratio command to cause shifting to an alternate gear ratio, for example, gear ratio 3F in response to the clutch suitability module 134 determining that either direction clutch FWD HIGH or speed clutch SPD1 associated with proposed transmission gear ratio 2F is unsuitable for engagement. Usually, it is the direction clutch FWD HIGH which is more prone to damage by high speed directional shifts and therefore the determination of suitability of the FWD HIGH clutch for proposed engagement is important. In an example embodiment, the module 142 may be operable to operate the module 134 to determine the suitability of each of the proposed clutches in a manner as described above. In addition, it will be noted that the transmission gear ratio command may cause the clutch control module 140 to generate corresponding alternate speed and direction clutch control signals, also in a manner as described above, to cause engagement of the alternate transmission gear ratio 3F. In engaging gear ratio 3F, the energy going through the clutches is controlled. In addition, it will be noted that the spike of energy associated with a transmission shift is typically absorbed by gear ratio 3F, particularly the direction clutch FWD LOW as the speed clutch engages before the direction clutch when engaging a transmission gear ratio, the direction clutch therefore which bearing most of the torque or energy of the shift.

In an example embodiment, it will be appreciated that the alternate transmission gear ratio command causes the clutch control module 140 to generate respective clutch control signals to cause engagement of the alternate speed and direction clutches. As mentioned above, for example, one clutch may be common to the alternate gear ratio and to the proposed gear ratio, for ease of explanation this common clutch will still be referred to as an alternate clutch when reference is made to the alternate transmission gear ratio. Similarly, the common clutch will be referred to as a proposed clutch when reference is made to the proposed transmission gear ratio as the case may be.

In any event, the transmission control module 142 may be operable to generate a proposed transmission gear ratio command to cause shifting to the proposed transmission gear ratio 2F, in response to the module 134 determining that both FWD HIGH and SPD1 are suitable for engagement.

The module 142 may be operable to generate further alternate transmission gear ratio commands to correspondingly operate the module 140 to generate further alternate clutch control signals effectively to cause engagement of the further alternate transmission gear ratios. For example, in a shift from gear ratio 2R to 2F, if the alternate transmission ratio is 1 R, the modules 142 and 140 may effectively cause engagement of gear ratio 1 F from 1 R before selection of the proposed transmission ratio 2F. In this regard, whereas gear ratio 1 R is the alternate transmission ratio, gear ratio 1 F is the further alternate transmission ratio. It follows that though the system 130 may, in a shift from gear ratio 2R to 2F, cause a shift first to an alternate transmission gear ratio 3F before shifting to the proposed transmission gear ratio 2F, the system 130 may be operable to instead shift from gear ratio 2R to 1 R to 1 F and then to the proposed transmission gear ratio 2F. The latter is a lower energy shift but would be more noticeable by the operator.

The shift from gear ratio 2R to 2F is effectively a shift into FWD HIGH and a downshift this creates an undesirable jerk perceivable by the operator as jerk may effectively relate to the rate of change of acceleration. However as the gear ratio is the same in the shift from gear ratio 2R to the alternate transmission gear ratio 3F, the shift from gear ratio 3F to 2F is perceived to be smoother with less jerk associated with the machine.

Though alluded to above, it will be noted for completeness that clutch control signals to cause engagement of oncoming clutches also automatically cause disengagement of the already engaged outgoing clutches.

It will be appreciated that the transmission control module 142 is operable to generate an alternate transmission gear ratio command to cause shifting to an alternate speed gear ratio before a proposed speed gear ratio in the case of downshifts or upshifts in speed in the same direction, in a similar manner as described herein with direction changing gear selections.

The system 130 may also, for example, be operable to inhibit certain shift requests, and reduce engine speed if certain operating conditions are detected. In particular, the system 130 may be configured to inhibit requests to shift to lower gears (downshifts in speed) to prevent engine over-speeding and/or damage to the transmission's mechanisms.

If the operator requests a lower gear than the currently engaged gear, the system 130 will execute the downshift if transmission output speed is less than or equal to the maximum allowed speed (runout speed) for the next lower gear. If transmission output speed is above the runout speed for the next lower gear, the system 130 will inhibit the downshift. If the request is maintained and transmission output speed falls below the runout speed for the next lower gear, a shift will be made to the next lower gear. This process will continue until the requested or selected gear is reached. If another shift request is made before the original request is processed, the last request will take priority and will be subject to the normal shift inhibitions.

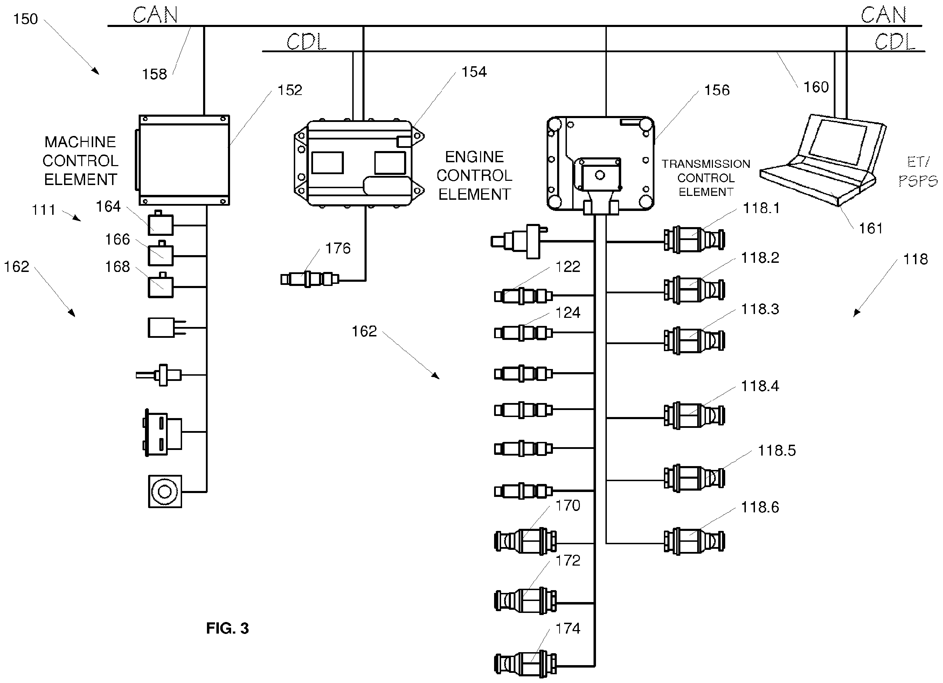

Referring also now to FIG. 3 of the drawings, where an example embodiment of a transmission control system 150 is shown. The transmission control system 150 is an example implementation of the transmission control system 130 hereinbefore described and therefore the preceding discussion applies substantially to the discussion of FIG.3.

The system 150 may comprise a plurality of hardware elements. In particular, the transmission control system 150 may comprise a machine control elements 152 and an engine control element 154 communicatively coupled to a transmission control element 156 by way of a controller area network communication means 158. Some elements of the system 150 may be communicatively coupled by way of a suitable data link means 160. The system 150 also comprises a fault diagnostic module 161 for fault diagnostics and codes, to allow for software flash to controller.

The elements 152, 154, and 156 may comprise conventional electronic circuitry as described above with reference to system 130 and it will be noted that the transmission control element 156 may comprise all the modules associated with the system 130 as hereinbefore described.

The machine control element 152 is communicatively coupled to a plurality of sensors and switches 162. In particular, the element 152 is communicatively coupled to a park brake status sensor or switch, service brake pressure switch, gear neutraliser override switch and a back-up alarm. The element 152 is also communicatively coupled to the joystick/ switch arrangement 111 to receive shift requests from the operator by way of shift signals generated by actuation the joystick 111. Switches 164, 166, and 168 correspond to direction, upshift speed, and downshift speed shifts respectively and may be operated by way of the joystick 111.

In one example embodiment, the machine control element 152 may be operable to transfer shift signals for proposed clutches, received from the operator via the joystick in a manner described above, to the transmission control element 156 via the means 158 in the form of the shift command receivable by the element 156.

Instead, or in addition, to the transmission control element 156, the machine control element 152 may be operable to inhibit certain shift requests received from the operator depending on operating conditions detected

The transmission control element 156 is communicatively coupled to and operable to receive transmission output speed values from the sensors 122 and 124 directly. The element 156 also communicatively coupled to sensors 162 comprising an engine coolant temperature sensor, transmission fluid temperature sensor, hydraulic temperature sensor. In addition, to controlling fan reverse solenoid 170, demand fan speed solenoid 172, and pump displacement solenoid 174, the transmission control element 156 may be operable to control each solenoid of the solenoid arrangement 118, thereby to control the respective corresponding clutches described above. In particular, the element 156 may be able to control the FWD LOW clutch solenoid 118.1, FWD HIGH clutch solenoid 118.2, REV clutch solenoid 118.3, SPD1 clutch solenoid 118.4, SP2 clutch solenoid 118.5, and SP3 clutch solenoid 118.6.

The transmission control element 156, may be operable to control the respective solenoid arrangement 118 by way of the clutch control signals generated thereby. The element 156 is configured to generate and send clutch control signals to the respective solenoids of the solenoid arrangement 118, by way of solenoid driver software or circuitry associated with the transmission control element 156. The clutch control signal may also optionally be sent to and operate one or more of the solenoids 172, 174, 176 in so far as they facilitate engagement of a desired clutch.

The transmission control system 130 may also be configured to receive data indicative of engine speed by way of the engine control element 154. To this end, the engine control element 154 may typically be communicatively coupled to an engine speed sensor to receive data indicative of engine speed therefrom.

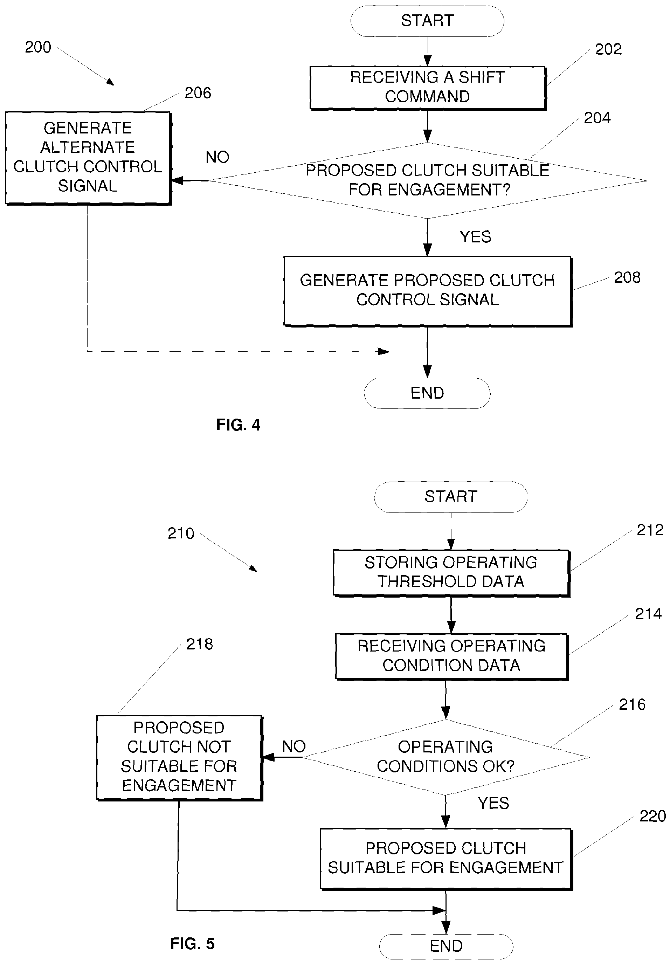

Example embodiments will now be further described in use with reference to FIGS. 4 to 8. The example methods shown in FIGS. 4 to 8 are described with reference to FIGS. 1 to 3, a and are typically carried out by the transmission control system 130, 150 although it is to be appreciated that the example methods may be applicable to other systems (not illustrated) as well. The methods shown in FIGS. 4 to 8 are computer implemented methods associated with a set of non-transient computer executable instructions stored on a computer readable medium which when executed by a computing device causes the same to provide the methods as described herein.

Referring to FIG.4, where a high-level flow diagram of a method 200 for controlling a transmission, for example, transmission 106, in accordance with an example embodiment, is shown. The method 200 comprises receiving, at block 202, a shift command to cause engagement of a proposed clutch. The shift command may be received in response to the operator making a transmission gear ratio selection via the joystick in the cab of the respective machine, in accordance with an example embodiment.

In response to receiving a clutch command, the method 200 comprises determining, automatically, at block 204, whether the proposed clutch is suitable for engagement. The step at block 204, essentially determines whether the proposed clutch will be able to withstand operating conditions associated with the transmission 106, if engaged. The determination may be based on the operating conditions of the transmission 106, or power train 100, and a corresponding operating condition threshold associated with the proposed clutch. The operating conditions may be determined from received operating condition data such as transmission output speed represented by transmission output speed data received from sensors 122 and/or 124 associated with the transmission 106. It follows that the operating condition threshold may be a transmission output speed threshold value associated with the tolerable operating conditions which the proposed clutch may be exposed to.

In other example embodiments, the operating condition data may comprise other data associated with the transmission 106, or the power train 100, indicative of the prevailing operating conditions which the proposed clutch will be exposed to, if engaged. The method 200 may therefore comprise selecting the operating condition threshold to correspond to the respective operating condition data received.

The method 200 may further comprise generating, at block 206, an alternate clutch control signal to cause engagement of at least one suitable alternate clutch, in response to determining that the proposed clutch is unsuitable or not suitable for engagement. The alternate clutch may be pre-selected to be engaged in response to determining that the proposed clutch is unsuitable for engagement. The alternate clutch may be stronger than the proposed clutch and may be more suited to be engaged in light of the prevailing operating conditions associated with the transmission 106. It follows that the alternate clutch may have a higher operating condition threshold than the proposed clutch. In this way, the proposed clutch may be saved from being engaged in prevailing operating conditions in which a spike of energy associated with the shift is likely to cause damage to the proposed clutch, if engaged. Instead, the spike of energy associated with the shift is absorbed by the alternate clutch.

It follows that the method 200 comprises generating, at block 208, a proposed clutch control signal to cause engagement of the proposed clutch, in response to determining that the proposed clutch is suitable for engagement. If the method proceeds to block 208, the operating conditions associated with the transmission 106, or the power train 100, are such that the proposed clutch may be engaged without damage being caused thereto. In this way, a proposed clutch may only be engaged automatically in response to a shift command if it is determined to be able to handle the operating condition to which the same will be exposed, in use.

The method 200 may only be carried out, or triggered, for those shifts which are likely to cause damage to a clutch, for example, high speed direction changing transmission shifts or undesirable speed upshifts or downshifts in the same direction. All other shifts associated with the transmission 106 may be carried out in a conventional manner with inhibits preventing certain transmission shifts.

The generated clutch control signals may be sent to the respective solenoids of the solenoid arrangement 118 to actuate the respective clutches, for example, in a conventional manner.

Referring to FIG. 5 of the drawings where a relatively low level flow diagram of a method 210 is shown. The method 210 comprises storing, at block 212, operating threshold data in a memory device, for example, memory device 136 of the system 130. The operating threshold data comprises one or more tolerable operating condition thresholds, particularly tolerable operating condition threshold values associated with one or more clutches associated with the transmission 106, wherein at least one operating condition threshold value is adjustable electronically, for example, by an engineer or technician. In an example embodiment, the operating threshold data may comprise two transmission output speed threshold values associated with a clutch, a first transmission output speed threshold value and a second transmission output speed threshold value. In one example embodiment, each clutch in the transmission 106 may have operating threshold data associated therewith, for example, at least to inhibit certain shifts.

The method 210 comprises receiving, at block 214, operating condition data comprising the transmission output speed or values representative thereof from the sensors 122 and/or 124. The operating condition data may be indicative of at least one prevailing operating condition which the proposed clutch will be operatively exposed to, if engaged. As described above, the operating condition data may be selected from various measureable or determinable parameters associated with the transmission 106, or the power train 100, indicative of the operating conditions which the proposed clutch will engage at. The method 210 may comprise continually receiving and effectively monitoring operating condition data.

The method 210 then comprises determining, at block 216, whether operating conditions are suitable for engagement of the proposed clutch based on one or both of the stored operating condition threshold data associated with the proposed clutch and the received operating condition data indicative of the prevailing operating condition which the proposed clutch will be exposed to, if engaged. In particular, the method 210 comprises determining whether the proposed clutch is suitable for engagement by comparing the received operating data with the stored operating threshold data associated with the proposed clutch. If, for example, the received transmission output speed value is greater than or equal to the corresponding stored transmission output speed threshold value, the method 210 comprises determining, at block 218, that the proposed clutch is not suitable for engagement.

However, if the received transmission output speed value is less than the corresponding stored transmission output speed threshold value, the method 210 comprises determining, at block 220, that the proposed clutch is suitable for engagement.

It will be appreciated that the step at block 204 of method 200 may substantially comprise the steps of blocks 216, 218 and 220, as the case may be.

In other example embodiments, it will be appreciated that the method 210 may comprise comparing the received operating condition data to an operating threshold band or range, instead of a value.

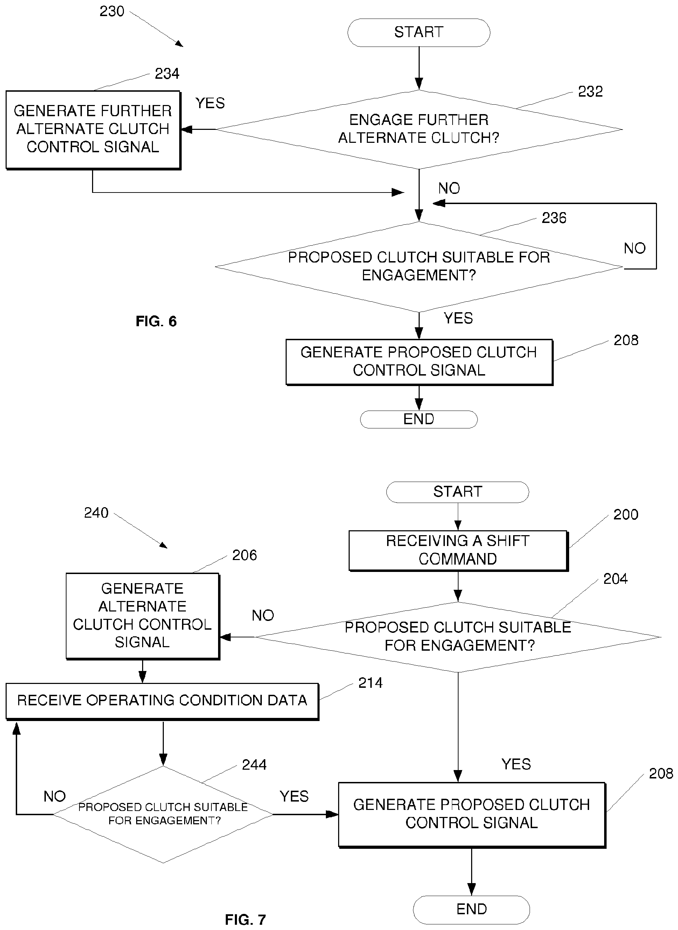

Referring now to FIG. 6 of the drawings where a high level flow diagram of a method 230 is illustrated. The method 230 typically proceeds, in one example embodiment, after engagement of an alternate clutch in a manner as described above with reference to method 200.

The method 230 may comprise determining, at block 232, whether a further alternate clutch should be engaged. This may be done by interrogating the memory device 136 for any prestored instructions to engage a further alternate clutch. In other example embodiments, the step at block 232 comprises receiving transmission output speed values and comparing the same to a transmission output speed threshold value associated with the further alternate clutch to determine the suitability of the further alternate clutch for engagement, in a similar fashion as the suitability determination as described with reference to the steps of blocks 216, 218 and 220 described above.

If it is determined that the further alternate clutch should be engaged, the method 230 comprises generating, at block 234, a suitable further or subsequent alternate clutch control signal, in a sequential manner after generation of the alternate clutch control signal, to cause engagement of the further alternate clutch in a sequential manner. It will be appreciated that the alternate clutch may optionally be engaged to reduce the overall energy for the shift to the proposed clutch.

If it is determined at block 232 that the further alternate clutch is not to be engaged, the method 230 comprises continually determining, at block 236 whether the proposed clutch is suitable for engagement. Though not illustrated, the method 230 may comprise a step, prior to the step of block 236, of receiving transmission output speed values in a similar fashion to the step of block 214 of the method 200. It follows that after the step of block 234, the method 230 also proceeds to the step (not illustrated) of receiving transmission output speed values similar to the step of block 214 of the method 200.

In any event, the step of block 236 may be carried done in a similar fashion as described above with reference to block 204 of method 200. However, the transmission output speed threshold value used in the step of block 236 may be different from the transmission output speed threshold value used in the step of block 204 of the method 200. In particular, the transmission output speed threshold value used in the step of block 204 of the method 200 is a first transmission output speed threshold value (e.g. 650 Hz) whereas the transmission output speed threshold value used in the step of block 236 is a second adjustable lower transmission output speed threshold value (e.g., 600Hz). The two transmission output speed threshold values (first and second) are used prior to and after generation of the alternate clutch control or further alternate clutch control signal, respectively as the case may be.

If it is determined, at block 236, that the proposed an alternate clutch should be engaged, the method 230 comprises generating, at block 208, a proposed clutch control signal to cause engagement of the proposed clutch, in a similar manner as described with reference to method 200. However, if the proposed clutch is not suitable for engagement, the method 230 proceeds to the step (not illustrated) in a similar fashion to the step of block 214 of the method 200 and then again to the step of block 236 thereby to determine, in a continual fashion, whether the proposed clutch is suitable for engagement.

Referring to FIG. 7 where another high-level flow diagram of a method 240 for controlling a transmission is shown. The method 240 has similar steps to methods described above and therefore like reference numerals are used to refer to similar steps/blocks. In addition, unless otherwise provided, no further description will be provided for similar blocks or steps described above.

In particular, the method 240 is substantially similar to method 200. However, the method 240 differs in that it comprises a step of receiving, at block 214, transmission output speed values, in a similar manner as described above with reference to the method 210, in a continual or continuous fashion after generation of the alternate clutch control signal or after the alternate clutch is engaged.

The method 240 then comprises determining, at block 244, whether the proposed clutch is suitable for engagement in response to continually receiving, at the step of block 214, transmission output speed values. In other words, the transmission output speed is monitored continually after the alternate clutch is engaged until the proposed clutch is suitable for engagement.

The step of block 244 may be carried out in a similar fashion as in block 204 or 236 as described above. If the proposed clutch is determined, at block 244, to be suitable for engagement, the method 240 proceeds to block 208 in a manner as described above.

In this way, the proposed clutch is actuated only once it is determined that it is safe to do so as the alternate clutch effectively slows the transmission 106 to achieve the safe operating condition for engagement of the proposed clutch. Moreover, it will noted that the proposed clutch is eventually engaged but damage thereto due to the same engaging under unsuitable operating conditions is mitigated by engagement of the alternate, stronger, clutch until safe operating condition for engagement of the proposed clutch is reached.

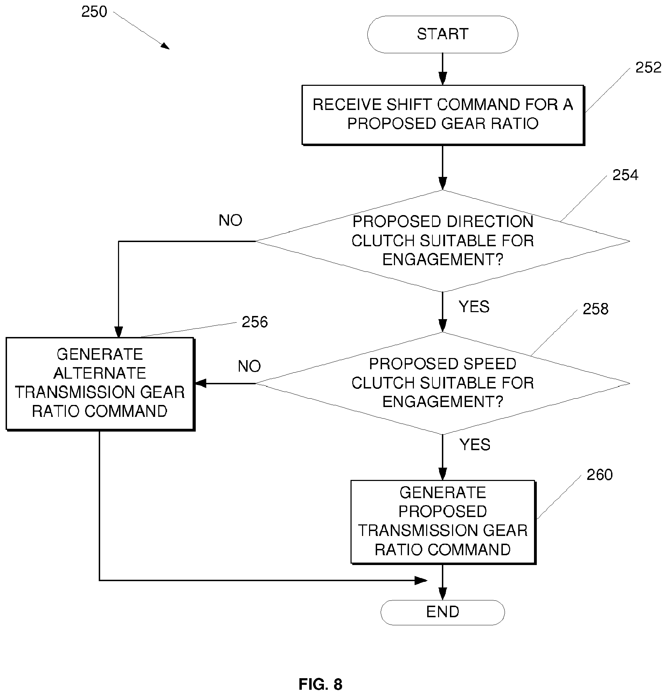

Referring to FIG. 8, where a flow diagram of a relatively low-level method 250 in accordance with the invention is shown. It will be noted that the method 250 is substantially similar to the method 200 described above. However, the method 250 is described in more detail to refer to the plurality of speed and direction clutches associated with the transmission 106 with reference to Table 1.

The method 250 comprises receiving a shift command to shift to a particular proposed gear transmission ratio selected by the operator. For example, if the operator selects transmission gear ratio 2F from a presently engaged transmission gear ratio of 2R, the shift command received is to cause engagement of 2F. It will be noted that 2F is associated with direction clutch FWD HIGH and speed clutch SPD1 and the method 250 may comprise the step of determining the respective speed and direction clutches associated with a proposed transmission gear ratio.

The method 250 then comprises determining automatically whether the proposed transmission gear ratio 2F is suitable for engagement from the presently engaged transmission gear ratio 2R, for example, by determining firstly, at block 252, whether the proposed direction changing clutch FWD HIGH is suitable for engagement. The step of block 252 may be substantially similar to the steps of blocks 204, 236, or 244 described above. If the proposed direction clutch FWD HIGH is determined to be unsuitable for engagement, the method 250 comprises generating, at block 256, an alternate transmission gear ratio command to cause engagement of a preselected alternate transmission gear ratio, for example, 3F in accordance with a predetermined rule. The alternate transmission gear ratio command causes the speed clutch corresponding to 3F to be engaged first, then the FWD LOW direction clutch associated with 3F is engaged such that the energy of the shift is absorbs substantially by the FWD LOW clutch, the FWD LOW clutch being stronger than the proposed FWD HIGH clutch.

If the directional clutch FWD HIGH is determined to be suitable for engagement, at block 254, the method 250 comprises an additional step. In particular, the method 250 comprises determining secondly, at block 258, if the speed clutch SPD1 associated with the proposed transmission gear ratio 2F is suitable for engagement in a similar manner as described above with reference to step of block 252.

If the speed clutch SPD1 is determined to be unsuitable for engagement, the method 250 comprises proceeding with method step of block 256 as described previously. However, if the speed clutch SPD1 is determined to be suitable for engagement, the method 250 comprises generating, at block 260, the proposed transmission gear ratio command to cause engagement of gear ratio 2F.

Though not specifically illustrated, it will be noted that in a similar manner as described above, the method 250 may comprise continually monitoring the transmission output speed after the alternate transmission gear ratio command is generated at block 256. In this case, the method then comprises (also not specifically illustrated) generating the proposed transmission gear ratio command in response to determining that the proposed transmission gear ratio 2F is suitable for engagement. In this way should 2F be determined to be not suitable for engagement, 3F is engaged momentarily until operating conditions are suitable for engagement of 2F. The transmission gear ratio flow is thus 2R to 3F to 2F and the machine is eventually engaged with the transmission gear ratio 2F as initially selected by the operator.

It follows that the operator may be alerted (e.g., via a display means in the cab) of the intermediate alternate gear ratio shift taking place. However, in most example embodiments, the alternate gear ratio is engaged only momentarily (e.g., milliseconds and/or seconds, or longer depending on the time taken for the operating conditions to be suitable for engagement of the proposed gear ratio) before engagement of the proposed gear ratio and the operator is not be informed of the alternate gear ratio engagement.

In some example embodiments, not illustrated, more than one alternate transmission gear ratio command is generated. For example, a subsequent alternate transmission gear ratio commands may be generated to cause sequential engagement of alternate clutches. The transmission gear ratio flow for more than one alternate clutch in a shift from gear ratio 2R to 2F may therefore be gear ratio 2R to 1 R to 1 F to 2F. Though this may reduce the energy at which the proposed transmission gear ratio 2F engages at, it will be noted that this shift is noticeable by an operator.

The transmission gear ratio commands may cause generation of respective clutch control signals which in turn cause engagement of the respective transmission gear ratios. For example, a transmission gear ratio command for the proposed transmission gear ratio 2F causes generation of a corresponding proposed direction clutch control signal to cause engagement of the FWD HIGH clutch and corresponding proposed speed clutch control signal to cause engagement of the SPD1 clutch.

Though described with reference to a high speed direction gear ratio change, it will be noted that the method 250 may be used for undesirable upshift or downshift speed changes in the same direction whereby an alternate gear ratio in the same direction is engaged prior to a proposed gear ratio if the proposed gear ratio is determined to be unsuitable for engagement. For example, should a gear ratio shift from 6F to 2F be requested, the method 250 may cause engagement of an alternate more suitable gear ratio in the same direction momentarily before engaging 2F if it is determined that 2F is unsuitable for engagement, based on the transmission output speed in a manner as herein described.

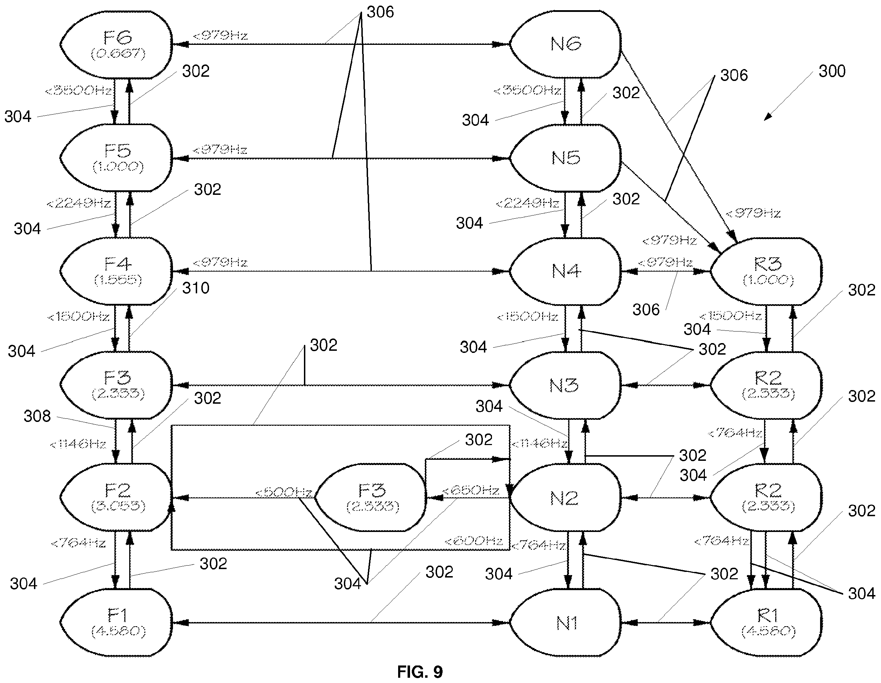

Referring to FIG.9, where a logic flow diagram corresponding to a general transmission shift map 300 associated with the transmission 106 is illustrated. FIG.9 is also described with reference to Table 1. The map 300 may be implemented by the transmission control system 130, 150 as described herein.

Each symbol on the shift map represents a transmission direction and gear ratio selection as a present state, states R2, F2, etc. correspond to the transmission ratios 2R, 2F, etc as provided in Table 1. In addition, the N states are neutral states corresponding to the condition where one or both clutches are disengaged.

The interconnecting lines with arrow heads represent bi-directional, conditional pathways to select future states based on operator input. Interconnections with one arrow head represent one direction pathways.

Operator using upshift switch 166 and downshift switch 168 control vertical map movement. The direction switch 164 and clutch lock control horizontal map movement.

Interconnecting lines 302 in the map 300 represent unrestricted state changes. Interconnecting lines 304 represent restricted state changes based on transmission output shaft frequency.

Interconnecting lines 306 represent restricted state changes based on transmission output shaft frequency and direction selection. Once the transmission output shaft frequency exceeds the threshold for a direction, the opposite direction shall be prevented until the frequency falls below the threshold again. However, reengagement of the original direction shall be allowed regardless of frequency. Once 2000 Hz is attained in F6, for example, F6 to N6 to F6 is permitted but N6 to R3 is prevented

Interconnecting lines 308 represents a restricted state change based on transmission output shaft frequency (same as lines 304). In addition, the control system 130 shall ensure that F3 is maintained for at least 1,500mS before a downshift to F2 if the previous states were R2 to N3.

Interconnection line 310 represents a restricted state change based on previous states. The control system 130 shall ensure that F3 is maintained for at least 1,500mS before an upshift to F4 if the previous states were R2 to N3.

Other embodiments of the invention will be apparent to those skilled in the field of invention from consideration of at least the specification. In addition, it will be appreciated that the specification and examples described herein are to be considered exemplary and in no way should be considered as limiting the scope of the invention described herein.

## Claims

1. A method of controlling a transmission (106) comprising a plurality of clutches and a plurality of transmission gears, the method comprising:
receiving (202) a shift command to cause engagement of a selected clutch of the plurality of clutches to engage a selected transmission gear ratio of the plurality of transmission gears;
receiving (214) data indicative of operating conditions of the transmission;
determining (204) whether the selected clutch is suitable for engagement by comparing the operating condition data with a corresponding operating condition threshold value or range associated with the selected clutch;
generating (206), in response to determining that the selected clutch is unsuitable for engagement, at least one alternate clutch control signal to cause engagement of at least one suitable alternate clutch of the plurality of clutches to engage at least one alternate transmission gear ratio of the plurality of transmission gears; and
generating (208), in response to determining that the selected clutch is suitable for engagement, a selected clutch control signal to cause engagement of the selected clutch to engage the selected transmission gear ratio,
**characterized in that**
the at least one alternate clutch is selected such that the transmission achieves operating conditions that meet the operating condition threshold value or range of the selected clutch such that the selected clutch is suitable for engagement.

2. A method as claimed in claim 1, the method comprising:
storing (212) data indicative of the operating condition threshold value or range associated with at least one clutch, the operating condition threshold value or range being indicative of at least one tolerable operating condition threshold value or range associated with the at least one clutch;
receiving (214) data indicative of at least one prevailing operating condition which a clutch will be operatively exposed to, if engaged; and
determining (216) whether the selected clutch is suitable for engagement by comparing the received prevailing operating condition data with at least one respective operating condition threshold value or range associated with the selected clutch, wherein:
if the received prevailing operating condition data is within the at least one operating condition threshold value or range associated with the selected clutch, the selected clutch is determined (220) to be suitable for engagement; and
if the received prevailing operating condition data is outside the at least one operating condition threshold value or range associated with the selected clutch, the selected clutch is determined (218) to be unsuitable for engagement.

3. A method as claimed in claim 2, the method comprising:
receiving (214) prevailing operating condition data in a continual fashion to determine (244) whether the selected clutch is suitable for engagement subsequent to engagement of the at least one alternate clutch; and
generating (208) a selected clutch control signal to cause engagement of the selected clutch in response to determining (244) that the selected clutch is suitable for engagement.

4. A method as claimed in claim 3, wherein an operating condition threshold value or range used to determine suitability of engagement of the selected clutch subsequent to engagement of the at least one alternate clutch is an adjustable operating condition threshold value or range and is different from the operating condition threshold value or range used to determine suitability of engagement of the selected clutch prior to engagement of the at least one alternate clutch.

5. A method as claimed in any one of the preceding, the method comprising:
receiving (214) operating condition data comprising values associated with one or more of transmission output speed, transmission input speed, clutch speed at which the selected clutch will engage, and machine speed associated with a machine to which the transmission (106) is operatively coupled; and
storing (212) data indicative of the operating condition threshold value or range correspondingly comprising one or more operating condition threshold values or ranges selected from a group comprising a transmission output speed threshold value, a transmission input speed threshold value, a clutch speed threshold value, and a machine speed threshold value associated with the at least one clutch.

6. A method as claimed in any one of the preceding claims, wherein the transmission (106) comprises a plurality of speed changing clutches and direction changing clutches, and wherein the selected clutch comprises a selected speed changing clutch or a selected direction changing clutch, and the alternate clutch comprises an alternate speed changing clutch or an alternate direction changing clutch.

7. A system (130, 150) to control a transmission (106), the transmission (106) comprising a plurality of clutches and a plurality of transmission gears, the system (130, 150) comprising:
a shift receiver module (132) operable to receive a shift command to cause engagement of a selected clutch of the plurality of clutches to engage a selected transmission gear ratio of the plurality of gears;
an operating condition monitoring module (138) operable to receive data indicative of operating conditions of the transmission;
a clutch suitability module (134) operable to determine whether the selected clutch is suitable for engagement by comparing the operating condition data with a corresponding operating condition threshold value or range associated with the selected clutch; and
a clutch control module (140) operable to:
generate, in response to determining that the selected clutch is unsuitable for engagement, at least one alternate clutch control signal to cause engagement of at least one suitable alternate clutch of the plurality of clutches to engage at least one alternate transmission gear ratio of the plurality of transmission gears; and
generate, in response to the clutch suitability module determining the selected clutch is suitable for engagement, a selected clutch control signal to cause engagement of the selected clutch to engage the
selected transmission gear ratio,
wherein the clutch control module (140) is operable to select the at least one alternate clutch such that the transmission achieves operating conditions that meet the operating condition threshold value or range of the selected clutch such that the selected clutch is suitable for engagement.

8. A system (130, 150) as claimed in claim 7, the system (130, 150) further comprising:
a memory device (136) storing data indicative of the operating condition threshold value or range associated with at least one clutch, the operating condition threshold value or range being indicative of at least one tolerable operating condition threshold value or range associated with the at least one clutch; and
wherein the operating condition data is indicative of at least one prevailing operating condition which a clutch will be operatively exposed to, if engaged.

9. A system (130, 150) as claimed method as claimed in claim 8, wherein the clutch suitability module (134) is operable to compare the received prevailing operating condition data with at least one operating condition threshold value or range associated with the selected clutch to determine whether the selected clutch is suitable for engagement, wherein:
if the received prevailing operating condition data is within the at least one operating condition threshold value or range associated with the selected clutch, the selected clutch is suitable for engagement; and
if the received prevailing operating condition data is outside the at least one operating condition threshold value or range associated with the selected clutch, the selected clutch is unsuitable for engagement.

10. A system (130, 150) as claimed in any one of claims 7 to 9, wherein the transmission (106) comprises a plurality of speed changing clutches and direction changing clutches, and wherein a combination of a speed changing clutch and a direction changing clutch is associated with a transmission gear ratio, the system (130, 150) comprising a transmission control module (142) operable to:
generate an alternate transmission gear ratio command in response to the clutch suitability module determining that one of a selected direction changing clutch and selected speed changing clutch associated with a selected transmission gear ratio are unsuitable for engagement, wherein the alternate transmission gear ratio command causes the clutch control module (140) to generate respective clutch control signals to cause engagement of respective clutches; and
generate a selected transmission gear ratio command in response to determining that both of the selected direction changing clutch and selected speed changing clutch are suitable for engagement; wherein the selected transmission gear ratio command causes the clutch control module (140) to generate respective clutch control signals to cause engagement of the selected speed changing clutch and the selected direction changing clutch.

## Patentansprüche

1. Ein Verfahren zur Steuerung eines Getriebes (106), das eine Vielzahl von Kupplungen und eine Vielzahl von Getriebegängen umfasst, das Verfahren umfassend:
Empfangen (202) eines Schaltbefehls zum Bewirken eines Einkuppelns von einer ausgewählten Kupplung von der Vielzahl von Kupplungen, um eine ausgewählte Getriebegangstufe von der Vielzahl von Getriebegängen einzulegen;
Empfangen (214) von Daten, die auf Betriebsbedingungen von dem Getriebe hinweisen;
Bestimmen (204), ob die ausgewählte Kupplung für ein Einkuppeln geeignet ist, durch Vergleichen der Betriebsbedingungsdaten mit einem entsprechenden Betriebsbedingungsschwellenwert oder Bereich, der mit der ausgewählten Kupplung in Verbindung steht;
Erzeugen (206), als Reaktion auf ein Bestimmen, dass die ausgewählte Kupplung nicht für ein Einkuppeln geeignet ist, wenigstens ein alternatives Kupplungssteuerungssignal zum Bewirken eines Einkuppelns von wenigstens einer geeigneten alternativen Kupplung von der Vielzahl von Kupplungen, um wenigstens eine alternative Getriebegangstufe von der Vielzahl von Getriebegängen einzulegen; und
Erzeugen (208), als Reaktion auf ein Bestimmen, dass die ausgewählte Kupplung für ein Einkuppeln geeignet ist, ein Steuerungssignal für die ausgewählte Kupplung zum Bewirken eines Einkuppelns von der ausgewählten Kupplung, um die ausgewählte Getriebegangstufe einzulegen,
**dadurch gekennzeichnet, dass**
die wenigstens eine alternative Kupplung derart ausgewählt wird, dass das Getriebe Betriebsbedingungen erhält, die dem Betriebsbedingungsschwellenwert oder Bereich von der ausgewählten Kupplung entsprechen, so dass die ausgewählte Kupplung für ein Einkuppeln geeignet ist.

2. Ein Verfahren wie in Anspruch 1 beansprucht, das Verfahren umfassend:
Speichern (212) von Daten, die auf den Betriebsbedingungsschwellenwert oder Bereich hinweisen, der mit wenigstens einer Kupplung in Verbindung steht, wobei der Betriebsbedingungsschwellenwert oder Bereich auf wenigstens einen tolerierbaren Betriebsbedingungsschwellenwert oder Bereich hinweist, der mit der wenigstens einen Kupplung in Verbindung steht;
Empfangen (214) von Daten, die auf wenigstens eine vorherrschende Betriebsbedingung hinweisen, der eine Kupplung operativ ausgesetzt werden wird, falls eingekuppelt; und
Bestimmen (216), ob die ausgewählte Kupplung für ein Einkuppeln geeignet ist, durch Vergleichen der empfangenen vorherrschenden Betriebsbedingungsdaten mit wenigstens einem entsprechenden Betriebsbedingungsschwellenwert oder Bereich, der mit der ausgewählten Kupplung in Verbindung steht, wobei:
wenn die empfangenen vorherrschenden Betriebsbedingungsdaten innerhalb des wenigstens einen Betriebsbedingungsschwellenwertes oder Bereichs sind, der mit der ausgewählten Kupplung in Verbindung steht, bestimmt (220) wird, dass die ausgewählte Kupplung für ein Einkuppeln geeignet ist; und
wenn die empfangenen vorherrschenden Betriebsbedingungsdaten außerhalb des wenigstens einen Betriebsbedingungsschwellenwertes oder Bereichs sind, der mit der ausgewählten Kupplung in Verbindung steht, bestimmt (218) wird, dass die ausgewählte Kupplung nicht für ein Einkuppeln geeignet ist.

3. Ein Verfahren wie in Anspruch 2 beansprucht, das Verfahren umfassend:
Empfangen (214) von vorherrschenden Betriebsbedingungsdaten auf eine fortwährende Art und Weise, um zu bestimmen (244), ob die ausgewählte Kupplung für ein Einkuppeln geeignet ist, nach einem Einkuppeln von der wenigstens einen alternativen Kupplung; und
Erzeugen (208) eines Steuerungssignals für die ausgewählte Kupplung, um ein Einkuppeln von der ausgewählten Kupplung als Reaktion auf ein Bestimmen (244), das die ausgewählte Kupplung für ein Einkuppeln geeignet ist, zu bewirken.

4. Ein Verfahren wie in Anspruch 3 beansprucht, wobei ein Betriebsbedingungsschwellenwert oder Bereich, der verwendet wird, um eine Eignung zum Einkuppeln der ausgewählten Kupplung nach einem Einkuppeln der wenigstens einen alternativen Kupplung zu bestimmen, ein anpassbarer Betriebsbedingungsschwellenwert oder Bereich ist und sich von dem Betriebsbedingungsschwellenwert oder Bereich unterscheidet, der verwendet wird, um eine Eignung zum Einkuppeln der ausgewählten Kupplung vor einem Einkuppeln der wenigstens einen alternativen Kupplung zu bestimmen.

5. Ein Verfahren wie in einem der vorangegangenen Ansprüche beansprucht, das Verfahren umfassend:
Empfangen (214) von Betriebsbedingungsdaten, die Werte umfassen, die mit einem oder mehreren von einer Getriebeausgangsdrehzahl, einer Getriebeeingangsdrehzahl, einer Kupplungsdrehzahl, bei der die ausgewählte Kupplung einkuppeln wird, und einer Maschinendrehzahl verbunden mit einer Maschine, an die das Getriebe (106) wirksam gekuppelt ist, in Verbindung stehen; und
Speichern (212) von Daten, die auf den Betriebsbedingungsschwellenwert oder Bereich hindeuten, entsprechend umfassend einen oder mehrere Betriebsbedingungsschwellenwerte oder Bereiche ausgewählt aus einer Gruppe umfassend einen Getriebeausgangsdrehzahlschwellenwert, einen Getriebeeingangsdrehzahlschwellenwert, einen Kupplungsdrehzahlschwellenwert und einen Maschinendrehzahlschwellenwert, die mit der wenigstens einen Kupplung in Verbindung stehen.

6. Ein Verfahren wie in einem der vorangegangenen Ansprüche beansprucht, wobei das Getriebe (106) eine Vielzahl von drehzahlverändernden Kupplungen und richtungsverändernden Kupplungen umfasst und wobei die ausgewählte Kupplung eine ausgewählte drehzahlverändernde Kupplung oder eine ausgewählte richtungsverändernde Kupplung umfasst und die alternative Kupplung eine alternative drehzahlverändernde Kupplung oder eine alternative richtungsverändernde Kupplung umfasst.

7. Ein System (130, 150) zur Steuerung eines Getriebes (106), wobei das Getriebe (106) eine Vielzahl von Kupplungen und eine Vielzahl von Getriebegängen umfasst, das System (130, 150) umfassend:
ein Schaltempfängermodul (132), das betriebsbereit ist, um einen Schaltbefehl zum Bewirken eines Einkuppelns von einer ausgewählten Kupplung von der Vielzahl von Kupplungen zu empfangen, um eine ausgewählte Getriebegangstufe von der Vielzahl von Getriebegängen einzulegen;
ein Betriebsbedingungsbeobachtungsmodul (138), das betriebsbereit ist, um Daten zu empfangen, die auf Betriebsbedingungen von dem Getriebe hinweisen;
ein Kupplungseignungsmodul (134), das betriebsbereit ist, um zu bestimmen, ob die ausgewählte Kupplung für ein Einkuppeln geeignet ist, durch Vergleichen der Betriebsbedingungsdaten mit einem entsprechenden Betriebsbedingungsschwellenwert oder Bereich, der mit der ausgewählten Kupplung in Verbindung steht; und
ein Kupplungssteuerungsmodul (140), das betriebsbereit ist, um:
als Reaktion auf ein Bestimmen, dass die ausgewählte Kupplung nicht für ein Einkuppeln geeignet ist, wenigstens ein alternatives Kupplungssteuerungssignal zum Bewirken eines Einkuppelns von wenigstens einer geeigneten alternativen Kupplung von der Vielzahl von Kupplungen zu erzeugen, um wenigstens eine alternative Getriebegangstufe von der Vielzahl von Getriebegängen einzulegen; und
als Reaktion auf ein Bestimmen durch das Kupplungseignungsmodul, dass die ausgewählte Kupplung für ein Einkuppeln geeignet ist, ein Steuerungssignal für die ausgewählte Kupplung zum Bewirken eines Einkuppelns von der ausgewählten Kupplung zu erzeugen, um die ausgewählte Getriebegangstufe einzulegen,
wobei das Kupplungssteuerungsmodul (140) betriebsbereit ist, um die wenigstens eine alternative Kupplung derart auszuwählen, dass das Getriebe Betriebsbedingungen erhält, die dem Betriebsbedingungsschwellenwert oder Bereich von der ausgewählten Kupplung entsprechen, so dass die ausgewählte Kupplung für ein Einkuppeln geeignet ist.

8. Ein System (130, 150) wie in Anspruch 7 beansprucht, das System (130, 150) weiter umfassend:
eine Speichervorrichtung (136), die Daten speichert, die auf den Betriebsbedingungsschwellenwert oder Bereich hinweisen, der mit wenigstens einer Kupplung in Verbindung steht, wobei der Betriebsbedingungsschwellenwert oder Bereich auf wenigstens einen tolerierbaren Betriebsbedingungsschwellenwert oder Bereich hinweist, der mit der wenigstens einen Kupplung in Verbindung steht; und
wobei die Betriebsbedingungsdaten auf wenigstens eine vorherrschende Betriebsbedingung hinweisen, der eine Kupplung operativ ausgesetzt werden wird, falls eingekuppelt.

9. Ein System (130, 150) wie beanspruchtes Verfahren wie in Anspruch 8 beansprucht, wobei das Kupplungseignungsmodul (134) betriebsbereit ist, um die empfangenen vorherrschenden Betriebsbedingungsdaten mit wenigstens einem entsprechenden Betriebsbedingungsschwellenwert oder Bereich zu vergleichen, der mit der ausgewählten Kupplung in Verbindung steht, um zu bestimmen, ob die ausgewählte Kupplung für ein Einkuppeln geeignet ist, wobei:
wenn die empfangenen vorherrschenden Betriebsbedingungsdaten innerhalb des wenigstens einen Betriebsbedingungsschwellenwertes oder Bereichs sind, der mit der ausgewählten Kupplung in Verbindung steht, die ausgewählte Kupplung für ein Einkuppeln geeignet ist; und
wenn die empfangenen vorherrschenden Betriebsbedingungsdaten außerhalb des wenigstens einen Betriebsbedingungsschwellenwertes oder Bereichs sind, der mit der ausgewählten Kupplung in Verbindung steht, die ausgewählte Kupplung nicht für ein Einkuppeln geeignet ist.

10. Ein System (130, 150) wie in einem der Ansprüche 7 bis 9 beansprucht, wobei das Getriebe (106) eine Vielzahl von drehzahlverändernden Kupplungen und richtungsverändernden Kupplungen umfasst und wobei eine Kombination von einer drehzahlverändernden Kupplung und einer richtungsverändernden Kupplung mit einer Getriebegangstufe verbunden ist, wobei das System (130, 150) ein Getriebesteuerungsmodul (142) umfasst, das betriebsbereit ist, um:
einen alternativen Getriebegangstufenbefehl als Reaktion darauf zu erzeugen, dass das Kupplungseignungsmodul bestimmt, dass eine von einer ausgewählten richtungsverändernden Kupplung und einer ausgewählten drehzahlverändernden Kupplung, die mit einer ausgewählten Getriebegangstufe verbunden sind, nicht für ein Einkuppeln geeignet sind, wobei der alternative Getriebegangstufenbefehl bewirkt, dass das Kupplungssteuerungsmodul (140) entsprechende Kupplungssteuerungssignale erzeugt, um ein Einkuppeln von entsprechenden Kupplungen zu bewirken; und
einen ausgewählten Getriebegangstufenbefehl als Reaktion auf ein Bestimmen, dass sowohl die ausgewählte richtungsverändernde Kupplung als auch die ausgewählte drehzahlverändernde Kupplung für ein Einkuppeln geeignet sind, zu erzeugen, wobei der ausgewählte Getriebegangstufenbefehl bewirkt, dass das Kupplungssteuerungsmodul (140) entsprechende Kupplungssteuerungssignale erzeugt, um ein Einkuppeln von der ausgewählten drehzahlverändernden Kupplung und der ausgewählten richtungsverändernden Kupplung zu bewirken.

## Revendications

1. Procédé de commande d'une transmission (106) comprenant une pluralité d'embrayages et une pluralité d'engrenages de transmission, le procédé comprenant:
la réception (202) d'un ordre de changement de vitesse pour provoquer la mise en prise d'un embrayage sélectionné de la pluralité d'embrayages pour mettre en prise un rapport de vitesse de transmission sélectionné de la pluralité d'engrenages de transmission ;
la réception (214) de données indicatives de conditions de fonctionnement de la transmission ;
la détermination (204) si l'embrayage sélectionné est approprié pour une mise en prise en comparant les données de condition de fonctionnement à une plage ou valeur de seuil de condition de fonctionnement correspondante associée à l'embrayage sélectionné ;
la production (206), en réponse à la détermination que l'embrayage sélectionné est peu approprié pour une mise en prise, au moins un autre signal de commande d'embrayage pour provoquer la mise en prise d'au moins un autre embrayage approprié de la pluralité d'embrayages pour mettre en prise au moins un rapport de vitesse de transmission supplémentaire de la pluralité d'engrenages de transmission ; et
la production (208), en réponse à la détermination que l'embrayage sélectionné est approprié pour une mise en prise, d'un signal de commande d'embrayage sélectionné pour provoquer la mise en prise de l'embrayage sélectionné pour mettre en prise le rapport de vitesse de transmission sélectionné,
**caractérisé en ce que** l'au moins un autre embrayage est sélectionné de sorte que la transmission parvient à des conditions de fonctionnement qui satisfont à la plage ou valeur de seuil de condition de fonctionnement de l'embrayage sélectionné de sorte que l'embrayage sélectionné est approprié pour une mise en prise.

2. Procédé selon la revendication 1, le procédé comprenant :
le stockage (212) de données indicatives de la plage ou valeur de seuil de condition de fonctionnement associée à au moins un embrayage, la plage ou valeur de seuil de condition de fonctionnement étant indicative d'au moins une plage ou valeur de seuil de condition de fonctionnement tolérable associée à au moins un embrayage ;
la réception (214) de données indicatives d'au moins une condition de fonctionnement dominante à laquelle un embrayage sera exposé de manière opérationnelle, s'il est en prise ; et
la détermination (216) si l'embrayage sélectionné est approprié pour une mode de réalisation particulier en comparant les données de condition de fonctionnement dominante reçues à au moins une plage ou valeur de seuil de condition de fonctionnement respective associée à l'embrayage sélectionné, dans lequel :
si les données de condition de fonctionnement dominante reçues sont à l'intérieur de l'au moins une plage ou valeur de seuil de condition de fonctionnement associée à l'embrayage sélectionné, l'embrayage sélectionné est déterminé (220) comme étant approprié pour une mise en prise ; et
si les données de condition de fonctionnement dominante reçues sont à l'extérieur de l'au moins une plage ou valeur de seuil de condition de fonctionnement associée à l'embrayage sélectionné, l'embrayage sélectionné est déterminé (218) comme étant peu approprié pour une mise en prise.

3. Procédé selon la revendication 2, le procédé comprenant :
la réception (214) de données de condition de fonctionnement dominante d'une façon continuelle pour déterminer (244) si l'embrayage sélectionné est approprié pour une mise en prise suite à la mise en prise de l'au moins un autre embrayage ; et
la production (208) d'un signal de commande d'embrayage sélectionné pour provoquer la mise en prise de l'embrayage sélectionné en réponse à la détermination (244) que l'embrayage sélectionné est approprié pour une mise en prise.

4. Procédé selon la revendication 3, dans lequel une plage ou valeur de seuil de condition de fonctionnement utilisée pour déterminer la pertinence de mise en prise de l'embrayage sélectionné suite à la mise en prise de l'au moins un autre embrayage est une plage ou valeur de seuil de condition de fonctionnement réglable et est différente de la plage ou valeur de seuil de condition de fonctionnement utilisée pour déterminer la pertinence de mise en prise de l'embrayage sélectionné avant la mise en prise de l'au moins un autre embrayage.

5. Procédé selon l'une quelconque des revendications précédentes, le procédé comprenant :
la réception (214) de données de condition de fonctionnement comprenant des valeurs associées à une ou plusieurs d'une vitesse de sortie de transmission, d'une vitesse d'entrée de transmission, d'une vitesse d'embrayage à laquelle l'embrayage sélectionné se mettra en prise, et d'une vitesse machine associée à une machine à laquelle la transmission (106) est accouplée de manière opérationnelle ; et
le stockage (212) de données indicatives de la plage ou valeur de seuil de condition de fonctionnement comprenant de manière correspondante une ou plusieurs plages ou valeurs de seuil de condition de fonctionnement sélectionnées à partir d'un groupe comprenant une valeur de seuil de vitesse de sortie de transmission, une valeur de seuil de vitesse d'entrée de transmission, une valeur de seuil de vitesse d'embrayage et une valeur de seuil de vitesse machine associée à l'au moins un embrayage.

6. Procédé selon l'une quelconque des revendications précédentes, dans lequel la transmission (106) comprend une pluralité d'embrayages de changement de vitesse et d'embrayages de changement de direction, et dans lequel l'embrayage sélectionné comprend un embrayage de changement de vitesse sélectionné ou un embrayage de changement de direction sélectionné, et l'autre embrayage comprend un autre embrayage de changement de vitesse ou un autre embrayage de changement de direction.

7. Système (130, 150) pour commander une transmission (106), la transmission (106) comprenant une pluralité d'embrayages et une pluralité d'engrenages de transmission, le système (130, 150) comprenant :
un module récepteur de changement de vitesse (132) pouvant être mis en oeuvre pour recevoir une commande de changement de vitesse pour provoquer la mise en prise d'un embrayage sélectionné de la pluralité d'embrayages pour mettre en prise un rapport de vitesse de transmission sélectionné de la pluralité d'engrenages ;
un module de contrôle de condition de fonctionnement (138) pouvant être mis en oeuvre pour recevoir des données indicatives de conditions de fonctionnement de la transmission ;
un module de pertinence d'embrayage (134) pouvant être mis en oeuvre pour déterminer si l'embrayage sélectionné est approprié pour une mise en prise en comparant les données de condition de fonctionnement à une plage ou valeur de seuil de condition de fonctionnement correspondante associée à l'embrayage sélectionné ; et
un module de commande d'embrayage (140) pouvant être mis en oeuvre pour :
produire, en réponse à la détermination que l'embrayage sélectionné est peu approprié pour une mise en prise, au moins un autre signal de commande d'embrayage pour provoquer une mise en prise d'au moins un autre embrayage approprié de la pluralité d'embrayages pour mettre en prise au moins un autre rapport de vitesse de transmission de la pluralité d'engrenages de transmission ; et
produire, en réponse au module de pertinence d'embrayage déterminant que l'embrayage sélectionné est approprié pour une mise en prise, un signal de commande d'embrayage sélectionné pour provoquer la mise en prise de l'embrayage sélectionné pour mettre en prise le rapport de vitesse de transmission sélectionné,
dans lequel le module de commande d'embrayage (140) peut être mis en oeuvre pour sélectionner l'au moins un autre embrayage de sorte que la transmission parvient à des conditions de fonctionnement qui satisfont à la plage ou valeur de seuil de condition de fonctionnement de l'embrayage sélectionné de sorte que l'embrayage sélectionné est approprié pour une mise en prise.

8. Système (130, 150) selon la revendication 7, le système (130, 150) comprenant en outre :
un dispositif de mémoire (136) stockant des données indicatives de la plage ou valeur de seuil de condition de fonctionnement associée à l'au moins un embrayage, la plage ou valeur de seuil de condition de fonctionnement étant indicative d'au moins une plage ou valeur de seuil de condition de fonctionnement tolérable associée à l'au moins un embrayage ; et
dans lequel les données de condition de fonctionnement sont indicatives d'au moins une condition de fonctionnement dominante à laquelle un embrayage sera exposé de manière opérationnelle, s'il est en prise.

9. Système (130, 150) selon la revendication 8, dans lequel le module de pertinence d'embrayage (134) peut être mis en oeuvre pour comparer les données de condition de fonctionnement dominante reçues à au moins une plage ou valeur de seuil de condition de fonctionnement associée à l'embrayage sélectionné pour déterminer si l'embrayage sélectionné est approprié pour une mise en prise, dans lequel :
si les données de condition de fonctionnement dominante reçues sont à l'intérieur de l'au moins une plage ou valeur de seuil de condition de fonctionnement associée à l'embrayage sélectionné, l'embrayage sélectionné est approprié pour une mise en prise ; et
si les données de condition de fonctionnement dominante reçues sont à l'extérieur de l'au moins une plage ou valeur de seuil de condition de fonctionnement associée à l'embrayage sélectionné, l'embrayage sélectionné est peu approprié pour une mise en prise.

10. Système (130, 150) selon l'une quelconque des revendications 7 à 9, dans lequel la transmission (106) comprend une pluralité d'embrayages de changement de vitesse et d'embrayages de changement de direction, et dans lequel une combinaison d'un embrayage de changement de vitesse et d'un embrayage de changement de direction est associée à un rapport de vitesse de transmission, le système (130, 150) comprenant un module de commande de transmission (142) pouvant être mis en oeuvre pour :
produire un autre ordre de rapport de vitesse de transmission en réponse au module de pertinence d'embrayage déterminant qu'un d'un embrayage de changement de direction sélectionné et d'un embrayage de changement de vitesse sélectionné associé à un rapport de vitesse de transmission sélectionné est peu approprié pour une mise en prise, dans lequel l'autre ordre de rapport de vitesse de transmission amène le module de commande d'embrayage (140) à produire des signaux de commande d'embrayage respectifs pour provoquer la mise en prise d'embrayages respectifs ; et
produire un ordre de rapport de vitesse de transmission sélectionné en réponse à la détermination que tant l'embrayage de changement de direction sélectionné que l'embrayage de changement de vitesse sélectionné sont appropriés pour une mise en prise ; dans lequel l'ordre de rapport de vitesse de transmission sélectionné amène le module de commande d'embrayage (140) à produire des signaux de commande d'embrayage respectifs pour provoquer la mise en prise de l'embrayage de changement de vitesse sélectionné et de l'embrayage de changement de direction sélectionné.
